# EUROPEAN PATENT APPLICATION

(11) **EP 1 594 215 A1**
(43) Date of publication of application: **09.11.2005**
(21) Application number: 05103772.9
(22) Date of filing: 04.05.2005
(51) Int. Cl.: H02M 1/00

(54) **A rectifier circuit including a power factor correction**

(30) Priority: 05.05.2004 EP 04010619
(71) Applicant: Tyco Electronics EC Ltd., 260 Bicske (HU); Tyco Electronics Raychem GmbH, 85521 Ottobrunn (DE)
(72) Inventor: Temesi, Erno, 2094, Nagykovacsi (HU); Frisch, Michael, 81379, Munich (DE); Yu, Jinghui, 266101, Qingdao (CN)
(74) Representative: Johnstone, Douglas Ian

(57) **Abstract**

A rectifier circuit having a power factor correction and providing a DC output, comprising: two or more AC inputs (J1, J2) to provide AC power having an AC oscillation and at least two power factor correction stages (PFC1, PFC2) which are directly coupled with one or more of the AC inputs (J1, J2), wherein each of the power factor correction stages (PFC1, PFC2) control a flow of current through the one or more coupled AC inputs (J1, J2) so that the power factor is optimized; wherein the power factor correction stages (PFC1, PFC2) are designed to operate during different half waves of the AC oscillation with respect to one or more of the AC inputs (J1, J2).

## Description

The present invention relates to a rectifier circuit, particularly to a rectifier circuit having a power factor correction.

For DC applications using AC power, a rectifier circuit is normally used in order to transform the AC power into a DC power provided to the DC application. The rectifier circuit normally includes a capacitance to smooth the DC output voltage. Due to the rectifier circuit, an AC current from the AC supply flows only if the instantaneous value of the AC voltage exceeds the capacitor voltage which results in short current pulses having a high current value. This can lead to interferences on the AC power lines which affect other power consuming devices.

To avoid these high current pulses, a power factor correction unit is normally included in the rectifier circuit to ensure that voltage and current on the AC power lines are substantially in phase and no current pulses are developed.

Conventionally, a rectifier circuit comprises a diode bridge including four diodes to rectify an AC power source so that a hold-up capacitor is loaded. The voltage of the hold-up capacitor can be supplied as the DC voltage to the DC outputs. As the hold-up capacitor is only loaded if the voltage applied from the diode bridge is higher than the capacitor voltage, current peaks are developed. In order to avoid this, a power factor correction stage is introduced between the diode bridge and the hold-up capacitor. The power factor correction stage normally includes a switch and a boost diode which are connected to the diode bridge via an inductor. The switch is controlled by a control circuit frequency which is much higher than the frequency of the AC power.

By activating the switch, a boost voltage is developed via the inductor which is rectified by the boost diode and used for loading the hold-up capacitor. The control circuit controls the switch in a manner that an AC current is drawn from the AC power line which is in phase with the AC voltage and sinusoidal (provided that the AC power is also supplied in a sinusoidal waveform) and has an amplitude to allow the DC outputs to supply a specific DC power. The efficiency of the power factor correction stage depends substantially on the number of electronic devices used in the rectifier circuit. Particularly, the number of diodes used in a current path affects the efficiency of the power factor correction.

It is therefore an object of the present invention to increase the power factor correction efficiency of a power factor correction stage of a rectifier circuit.

This object is met by the rectifier circuit of claim 1. Further embodiments of the present invention are indicated in the dependant claims.

According to a first aspect of the present invention, there is provided a rectifier circuit including a power factor correction and providing a DC output, comprising: two or more AC inputs to provide AC power having an AC oscillation, and at least two power factor correction stages which are directly coupled with one or more of the AC inputs; wherein each of the power factor correction stages controls a flow of current through the one or more coupled AC inputs so that the power factor is optimized; and wherein the power factor correction stages are designed so as to operate during different half waves of the AC oscillation with respect to one or more of the AC inputs.

The rectifier circuit of the present invention provides more than one power factor correction stage to address different half waves of the AC oscillation with respect to one or more of the AC inputs. The provision of two or more power factor correction stages allows omission of a full rectifying diode bridge resulting in increased efficiency of the power factor correction as only two instead of three diodes in the current path for each half wave are necessary.

Preferably, each of the power factor correction stages include an inductor which is coupled to one of the AC inputs, respectively.

Preferably, a current control means is provided for each of the power factor correction stages preventing a back flow of current through the respective power factor correction stage.

Preferably, each of the power factor correction stages includes a boost diode and a semiconductor switching device wherein each of the current control means prevents the semiconductor switching device from being reverse-biased.

Preferably, at least one of the current control means includes a diode which is connected so that the diode is forward-biased between the associated power factor correction stage and the AC input to prevent reverse-biased voltage on the semiconductor switching device on another half wave different from the one half wave.

Preferably, the at least two power factor correction stages are coupled to one of the AC inputs via a common inductor which is directly coupled to the one AC input, wherein the power factor correction stages are designed to operate on different half waves of the AC power, wherein one of the power factor correction stages controls the flow of current during the one half wave and another of the power factor correction stages controls the flow of current during the other half wave.

Preferably, a current control means is provided for each of the power factor correction stages preventing a backflow of current through the respective power factor correction stage. Each of the current control means prevents the respective semiconductor switching device from being reverse-biased. Each of the power factor correction stages includes a boost diode and a semiconductor switching device, wherein one of the power factor correction stages boosts the voltage at the one half wave of the AC input to a first DC output terminal and wherein the other of the power factor correction stages boosts the voltage at the other half wave of the AC input to a second DC output terminal.

Preferably, one of the current control means associated to the one power factor correction stage includes a diode which is arranged such that the diode is forward-biased between the one power factor correction stage and the one AC input to prevent a reverse-biased voltage on the semiconductor switching device of the one power factor correction stage during the other half wave and wherein the other of the current control means associated with the other power factor correction stages includes another diode which is arranged so that the other diode is forward-biased between the other power factor correction stage and the one AC input to prevent a reverse-biased voltage on the semiconductor switching device of the other power factor correction stage during the one half wave.

A charge circuit may be provided to charge a hold-up capacitor between a first and a second DC output during an initial phase wherein the charge circuit comprises a charging current control means including a current limiting device to operate the rectifier circuit in a reduced current mode wherein the charging current control means is in operation during the initial phase and wherein the current control means is in operation if the capacitor is loaded to a predetermined level.

A charging controller can be provided which controls the charge circuit wherein the charging controller switches the current control means depending on the current through the common inductor.

Advantageous embodiments of the present invention are discussed in detail thereinafter with respect to the accompanying drawings, in which:
Figure 1 shows a rectifier circuit according to a first embodiment of the present invention;
Figure 2 shows a rectifier circuit according to a second embodiment of the present invention;
Figure 3 shows the rectifier circuit of Figure 1 including a current measuring device;
Figure 4 shows a rectifier circuit according to a third embodiment of the present invention;
Figure 5 shows a rectifier circuit according to a fourth embodiment of the present invention;
Figure 6 shows a rectifier circuit according to a fifth embodiment of the present invention including a charge circuit; and
Figure 7 shows a rectifier circuit according to the fifth embodiment of the present invention wherein a circuit of the charge circuit is given as an example.

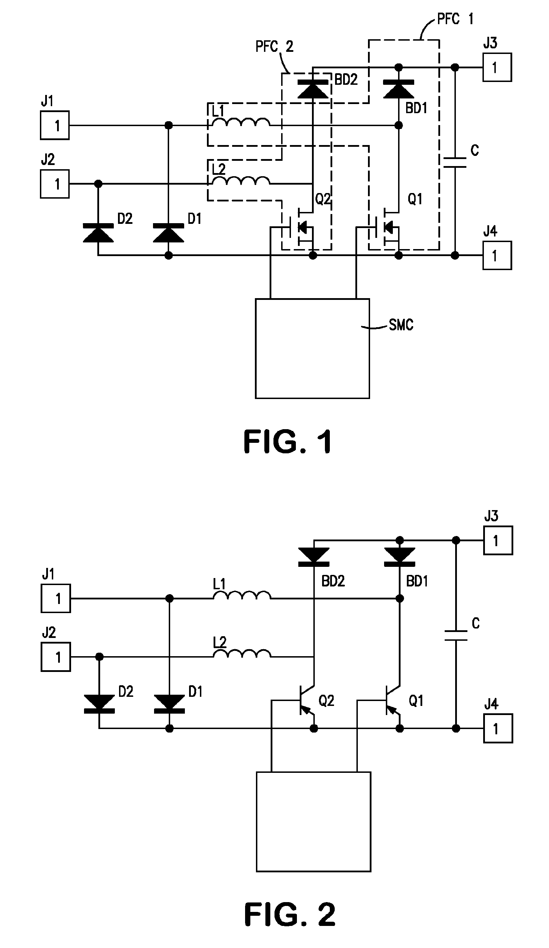

In Figure 1 a rectifier circuit according to a first embodiment of the present invention is depicted. The rectifier circuit has a first AC input terminal J1 and a second AC input terminal J2. At each of the AC input terminals, an AC voltage having a predetermined oscillation is provided, for example supplied by public power lines and the like.

Furthermore, the rectifier circuit comprises two DC output terminals, a first DC output terminal J3 which has a positive potential and a second DC output terminal J4 which has a negative potential.

The first AC input terminal J1 is directly connected to a first power factor correction stage PFC1 comprising a first inductor L1, a first boost diode BD1 and a first switch Q1. A second power factor correction stage PFC2 is directly connected to the second AC input terminal J2 and comprises a second inductor L2, a second boost diode BD2 and a second switch Q2. The first and second power factor correction stages are substantially equal in design, i.e. the electrical characteristics of the boost diodes, the inductors and the switches are substantially equal.

Between the first DC output terminal J3 and the second DC output terminal J4 a hold-up capacitance C is provided. The hold-up capacitance C smoothes the voltage between the DC outputs so that a variation of the output voltage due to the AC oscillation of the AC input voltage and/or an oscillation due to the power factor correction is decreased or eliminated.

As a first current control means associated with the first power factor correction stage PFC1, a first diode D1 is provided having its cathode connected to the first AC input terminal J1, and having its anode connected to the second DC output terminal J4. Similarly, a second diode D2 is provided which is associated with the second power factor correction stage PFC2 and which has its cathode connected to the second AC input terminal J2 and has its anode connected to the second DC output terminal J4. The first and second diode D1, D2 prevent a current backflow through the first or second switch Q1, Q2 to the respective AC input terminals J1, J2 by leading the current directly to the respective AC input terminal J1, J2 via the respective diode D1, D2.

Each of the power factor correction stages works by rapidly switching an inductor L1, L2 on and off between the respective AC input terminal J1, J2 and the second DC output terminal J4. By switching the respective inductor L1, L2, a voltage peak is induced which results in a flow of current through the respective boost diode BD1, BD2 if the potential at the first DC output terminal is lower than the voltage induced by the respective inductor. The switch of the power factor correction stage can be implemented as a MOSFET transistor, a bipolar transistor, an SCR device or such like.

The switches Q1, Q2 are controlled by a switch mode controller SMC which is connected to the control terminal of the switch, e.g. the gate terminal of MOSFETs. The switch mode controller SMC receives as inputs the AC input voltage, a measured current flow through the AC input terminals and the required DC output voltage. The switch mode controller SMC controls the current flow through the AC input terminals with reference to the AC input voltage. The switch mode controller SMC controls the AC currents so that the AC current is in phase with the AC voltage and comprises the same waveform, e.g. has a sinusoidal characteristic if the AC input voltage also has a sinusoidal characteristic.

The rectifier circuit according to Figure 1 operates with the two power factor correction stages so that the first power factor correction stage PFC1 controls the current during a first half wave and the second power factor correction stage PFC2 operates during a second half wave of the AC input voltage. With positive and negative half waves of the AC input voltage as a reference, a mean value of the potentials of the provided AC input terminals is determined, i.e. the first and second AC input terminal J1, J2. With reference to the mean voltage value of the AC input voltages, a positive and a negative half wave can be determined. If a positive half wave is supplied by the first AC input terminal J1, the first inductor L1 of the first power factor correction stage PFC 1 is loaded while the first switch Q1 is switched on. The first inductor L1 generates a high voltage peak having a positive voltage when the first switch Q1 is switched off. The positive voltage exceeds the voltage at the DC output terminal so that the boost diode BD1 is forward-biased so that current can flow through the boost diode BD1 into the hold-up capacitor C.

If a negative half wave is supplied by the first AC input terminal J1, the first rectifier diode D1 is forward biased so the first inductor L1 is not loaded. The negative voltage results in a reverse biasing of the first boost diode BD1 so that no current will flow to or from the first DC output terminal J3 through the first boost diode BD1. The function of the second power factor correction stage connected to the second AC input terminal J2 operates in the same manner.

When applying voltage to the AC input terminals, the terminal with the most negative voltage potential will forward-bias the rectifier diode D1, D2 connected to it while the AC input terminal with the positive voltage potential will reverse-bias the rectifier diode D1, D2 connected to it and allow it to control the current of the AC input terminal via the power factor correction stage connected to it. During a full phase of the AC input terminal, the sequential operation of the power factor correction stages results in a controlled input current for the whole phase of the AC input voltage.

The rectifier circuit of Figure 1 has the advantage that the efficiency of the rectification can be increased as, during one half wave, only two P-N-transitions are included in the current path so that the efficiency can be improved. Conventionally, three or more diodes are provided in a current path of a conventional rectifier circuit having a power factor correction.

In Figure 2 a rectifier circuit according to another embodiment of the invention is depicted. The main differences between the embodiment of Figure 2 and the embodiment of Figure 1 is that in the embodiment of Figure 2 the rectifier diodes D1, D2 and the boost diodes BD1, BD2 are connected in reverse polarity, resulting in the polarity between the output terminals J3, J4 being reversed. The function of the power factor correction stages PFC1, PFC2 is substantially similar to that discussed in Figure 1.

The boost diodes BD1, BD2 are forward-biased if the voltage peaks supplied by the inductors L1, L2 are more negative than the voltage at the first DC output terminal J3. In the other cases, the boost diodes BD1, BD2 are reverse-biased. When applying voltage to the AC input terminals J1, J2, the AC input terminal with the most positive voltage potential will forward-bias the rectifier diode D1, D2 connected to it, while the AC input terminal with negative voltage potential will reverse-bias the rectifier diode D1, D2 connected to it, and allow it to control the current of the AC input terminal by the power factor correction stage connected to it. During a full phase of the AC input, the sequential operation of the power factor correction stages will result in a controlled input current for the whole phase of the AC input voltage.

Another difference between the embodiment of Figure 1 and the embodiment of Figure 2 is that the switches Q1, Q2 are realized as bipolar transistors in the embodiment of Figure 2. Since the MOSFET transistors of Figure 1 and the bipolar transistors of Figure 2 are used as switches, only the switching characteristics are important. The bipolar transistors of Figure 2 can be used with the embodiment of Figure 1, and the MOSFET transistors of Figure 1 can be used in the embodiment of Figure 2.

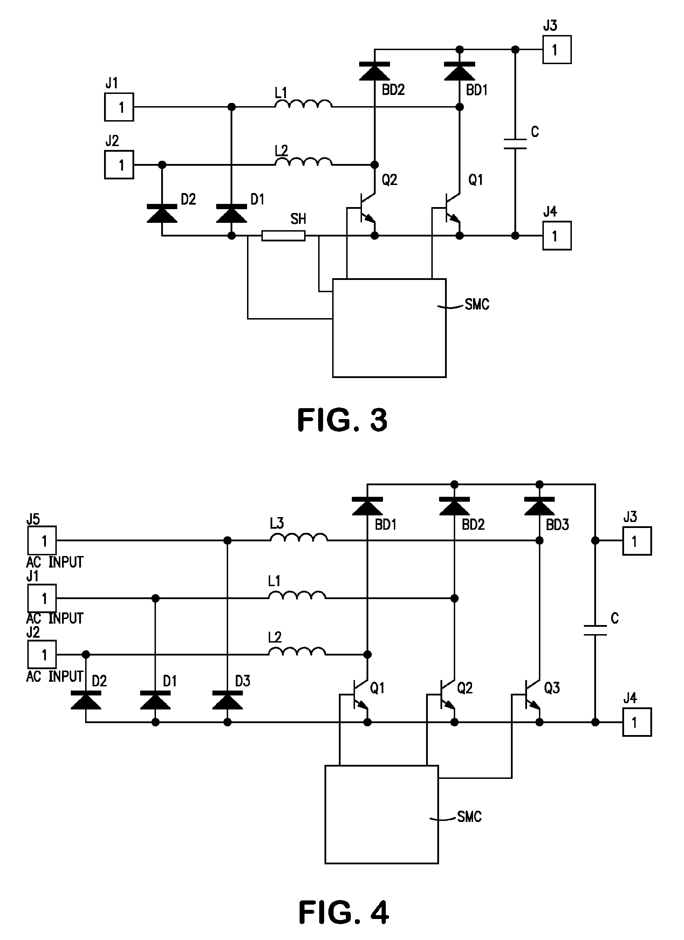

Figure 3 shows substantially the embodiment of Figure 1 wherein the switch mode controller is connected to a shunt resistor SH placed between the second DC output terminal J4 and the cathode terminals of the rectifier diodes D1, D2. The shunt resistor SH measures the AC input current and is used to control the current flow by the switch mode controller SMC. As indicated above, the AC current flow is to be controlled by the switch mode controller SMC and therefore represents a feedback input of the switch mode controller SMC. Not shown is that the switch mode controller SMC also receives as its input the AC input voltage as well as the DC output voltage.

Figure 4 shows another embodiment of the present invention wherein the rectifier circuit has three AC input terminals J1, J2, J5 which are coupled to three separated power factor correction stages PFC1 - PFC3. The power factor correction stages PFC1 - PFC3 are of the type shown in Figure 1 and Figure 3, wherein the respective switches are provided as bipolar npn-transistors Q1, Q2, Q3. Each of the transistors is controlled by the common switch mode controller SMC.

The power factor correction stages PFC1 - PFC3 comprise an inductor L1, L2, L3, a boost diode BD1, BD2, BD3 and the switch Q1, Q2, Q3, respectively. The switches Q1, Q2, Q3 are controlled separately, so that a three-phase power factor correction operation can be achieved. Similarly to the embodiments of Figure 1 to Figure 3, for each of the AC input terminals J1, J2, J5, a rectifier diode is provided wherein the respective rectifier diode D1, D2, D3 has its cathode connected to the second DC output terminal J4 and its anode to the AC input terminal J1, J2, J5, respectively.

When applying a voltage to the AC input terminals J1, J2, J5, the terminal with the most negative voltage potential will forward-bias the rectifier diode D1, D2, D3 connected to it, while the other AC input terminals with a more positive voltage potential will reverse-bias the rectifier diodes connected to them and allow them to control the current of the AC input terminal by the power factor correction stage connected to them. Due to a full phase of the AC input, the sequential operation of the power factor correction stages PFC1-PFC3 will result in a controlled input current for the whole phase of the AC input voltage.

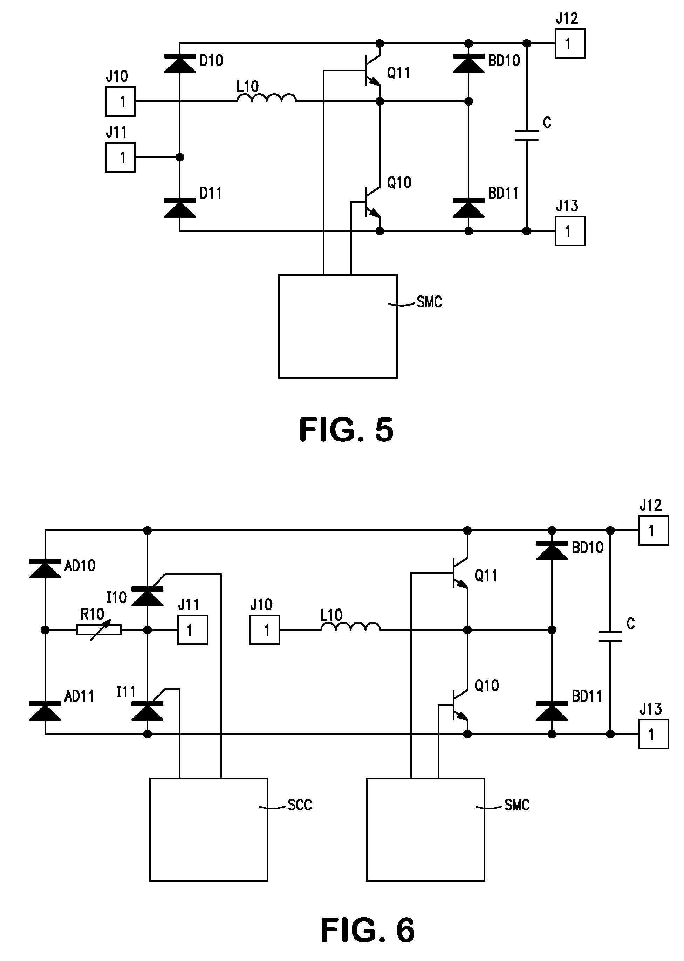

In Figure 5, another embodiment of the present invention is depicted. The embodiment of Figure 5 comprises two power factor correction stages PFC10, PFC11 coupled via one common inductor L10 to the first AC input terminal J10. A first power factor correction stage PFC10 includes a first switch Q10 and a first boost diode BD1 and the second power factor correction stage PFC11 comprises a second switch Q11 and a second boost diode BD11. Rectifying diodes D10, D11 are connected to a second AC input terminal J11 forming a rectifier half bridge.

The embodiment shown in Figure 5 is substantially a combination of the embodiments of Figure 1 and Figure 2. Here, a connection of the second AC input terminal J11 to a power factor correction stage can be omitted as all half waves of the AC input voltage are covered by the first and second power factor correction stages PFC10, PFC11. The second AC input terminal J11 is connected to the middle of the rectifier half bridge. The cathode of the first rectifier diode D10 is connected to the first DC output terminal J12 while the anode of the respective rectifier diode D10 is connected to the second AC input terminal J11. The second rectifier diode D11 is connected to the second AC input J11 with its cathode and connected to the second DC output terminal J13 with its anode.

When a voltage is applied to the AC input terminals, the second AC input terminal J11 has a more negative voltage potential than the first AC input terminal J10 and will forward-bias the second rectifier diode D11 of the rectifier half bridge connected to it. The first switch Q10 of the first power factor correction stage PFC10 controls the power factor from the AC source to the DC output terminals J12, J13 during this positive half wave of the AC input voltage. When the second AC input terminal J11 receives a more positive voltage potential than the first AC input terminal J10, the first rectifier diode D10 is forward-biased and the second power factor correction stage PFC11 boosts a negative voltage to the second DC output terminal J13. Similar to the functions of the embodiments of Figure 1 to 3, the full phase of the AC input voltage is current controlled by controlling the current by the first power factor correction stage PFC10 during a first half wave and controlling a current with the second power factor correction stage PFC11 during a second half wave of the AC input voltage.

The switch mode controller SMC controls the first and second switches Q10, Q11 so that both switches are not switched on at the same time.

In Figure 6, a rectifier circuit according to another embodiment of the present invention is depicted. The rectifier circuit is similar to the embodiment shown in Figure 5, however, in place of the rectifier half bridge, SCR devices I10, I11 are used. Elements of the rectifier circuit common to both embodiments have the same reference numeral.

Control terminals of the SCR devices I10, I11 are connected to a surge current controller SCC which detects if a hold-up capacitance C is charged to a predetermined level, and after detecting this the surge current controller SCC switches on the SCR devices I10, I11, thereby representing the function of a conventional rectifying diode.

Furthermore, a charge circuit is provided comprising at least one current limiting element R10 which is connected to the second AC input terminal J11 in series with a first auxiliary diode AD10. Auxiliary diode ADIO is connected by its cathode to the first DC output terminal J12 and by its anode to the current limiting element R1, and a second auxiliary diode AD11 is connected to the second DC output terminal J13 via its anode, and is connected to the current limiting element R1 by its cathode.

When switching on the AC power on the AC input terminals J10, J11, the surge current controller SCC does not switch on the SCR devices I10, I11 immediately. The load current to the hold-up capacitance C is controlled by the current limiting element R1 through the auxiliary diodes AD10, AD11. The surge current controller SCC may also have the function that in the case of current overload on the DC output terminals, the firing of the SCR devices I10, I11 is stopped and thereby the current is limited by the current limiting elements and the auxiliary diodes AD10, AD11.

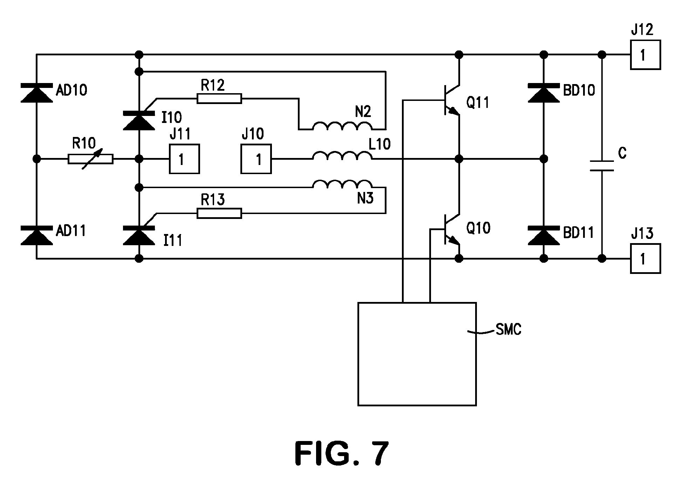

Figure 7 shows an example of a surge current controller SCC. The rectifier circuit according to Figure 7 is substantially the same as in the embodiment of Figure 6. The surge current controller is realized by a second and third winding N2, N3 of the common inductor L10 which are coupled to the control terminal of the SCR devices I10, I11 via a second and a third resistor R12, R13, respectively. The firing of the SCR devices I10, I11 is automatically controlled by appropriate voltage from the feedback windings N2, N3 of the common inductor L10. In an advantageous form, N2 is polarized in such a way that when the first SCR device receives a firing pulse when the first AC input terminal J10 is more positive than the second AC input terminal J11, and the third windings N3 are polarized in such a way that the second SCR device I11 receives a firing pulse when the second AC input terminal J11 is more positive than the first AC input terminal J10. The voltage transformer formed by windings N2, N3 and by the common inductor L10 can also be polarized in another way as the SCR devices can trigger in both current directions through the common inductor L10. The components of the surge current controller SCC, i.e. the second resistor R12, the third resistor R13, the second winding N2, and the third winding N3 are selected to fire the SCR devices I10, I11 at a time when a desired DC output voltage level is exceeded, thereby totally eliminating in-rush current.

## Claims

1. A rectifier circuit including a power factor correction and providing a DC output, comprising: two or more AC inputs (J1, J2, J5, J10, J11) to provide AC power having an AC oscillation, and at least two power factor correction stages (PFC1-PFC3, PFC10, PFC11) which are directly coupled with one or more of the AC inputs (J1, J2, J5, J10, J11); wherein each of the power factor correction stages (PFC1-PFC3, PFC10, PFC11) controls a flow of current through the one or more coupled AC inputs (J1, J2, J5, J10, J11) so that the power factor is optimized; and wherein the power factor correction stages (PFC1-PFC3, PFC10, PFC11) are designed so as to operate during different half waves of the AC oscillation with respect to one or more of the AC inputs (J1, J2, J5, J10, J11).

2. The rectifier circuit according to claim 1, wherein each of the power factor correction stages (PFC1-PFC3, PFC10, PFC11) includes an inductor (L1-L3, L10) which is coupled to one of the AC inputs (J1, J2, J5, J10, J11) respectively.

3. The rectifier circuit according to claim 1 or 2, wherein a current control means is provided for each of the power factor correction stages (PFC1-PFC3, PFC10, PFC11) preventing a back flow of current through the respective power factor correction stage (PFC1-PFC3, PFC10, PFC11).

4. The rectifier circuit according to claim 3, wherein each of the power factor correction stages (PFC1-PFC3, PFC10, PFC11) includes a boost diode (BD1, BD2, BD3, BD10, BD11) and a semiconductor switching device (Q1, Q2, Q3, Q10, Q11), wherein each of the current control means prevents the semiconductor switching device (Q1, Q2, Q3, Q10, Q11) from being reverse-biased.

5. The rectifier circuit according to claim 4, wherein at least one of the current control means includes a diode (D1, D2, D3, D10, D11) which is connected so that the diode is forward-biased between the associated power factor correction stage (PFC1-PFC3, PFC10, PFC11) and the AC input (J1, J2, J5, J10, J11) so as to prevent a reverse bias voltage on the semiconductor switching device (Q1, Q2, Q3, Q10, Q11) on another half wave different from the one half wave.

6. The rectifier circuit according to claim 1, wherein the at least two power factor correction stages (PFC10, PFC11) are coupled to one of the AC inputs (J10) via a common inductor (L10) which is directly coupled to the one AC input (J10), wherein the power factor correction stages (PFC10, PFC11) are designed to operate on different said half waves of the AC power; wherein one of the power factor correction stages (PFC10, PFC11) controls a flow of current at the one AC input (J10) during one said half wave and another of the power factor correction stages (PFC10, PFC11) controls a flow of current at the one AC input (J10) during the other said half wave.

7. The rectifier circuit according to claim 6, wherein a current control means is provided for each of the power factor correction stages (PFC10, PFC11) preventing a back flow of current through the respective power factor correction stage (PFC10, PFC11).

8. Rectifier circuit according to claim 7, wherein each of the current control means prevents the respective semiconductor switching device (Q10, Q11) from being reverse-biased.

9. Rectifier circuit according to claim 7 or 8, wherein each of the power factor correction stages (PFC10, PFC11) includes a boost diode and a semiconductor switching device (Q10, Q11); wherein one of the power factor correction stages boosts a voltage at the one half wave of the AC input (J10) to a first DC output terminal (J12, J13) and wherein the other of the power factor correction stages boosts a voltage at the other half wave of the AC input (J10) to a second DC output terminal (J12, J13).

10. The rectifier circuit according to claim 8 or 9, wherein one of the current control means associated with the one power factor correction stage includes a diode (AD10) which is arranged so that the diode (AD10) is forward-biased between the one power factor correction stage (PFC10) and the one AC input (J10), to prevent a reverse bias voltage on the semiconductor switching device (Q10) of the one power factor correction stage (PFC10) during the other half wave; and wherein the other of the current control means associated to the other power factor correction stage (PFC11) includes another diode (AD11) which is arranged so that the other diode (AD11) is forward biased between the other power factor correction stage (PFC11) and the one AC input (J10), to prevent a reverse bias voltage on the semiconductor switching device (Q11) of the other power factor correction stage (PFC11) during the one half wave.

11. The rectifier circuit according to claim 10, wherein a charge circuit is provided to charge a capacitor (C) between a first and a second DC output during an initial phase; wherein the charge circuit (J12, J13) comprises a charging current control means including a current limiting device (R10) to operate the rectifier circuit in reduced current mode during the initial phase and wherein the current control means (I10, I11) is in operation if the capacitor (C) is loaded to a predetermined level.

12. The rectifier circuit according to claim 11, wherein the charge circuit is controlled by a charging controller (SCC) wherein the charging controller (SCC) switches the current control means (I10, I11) depending on the voltage through the common inductor (L10).
